# EUROPEAN PATENT APPLICATION

(11) **EP 4 509 235 A1**
(43) Date of publication of application: **19.02.2025**
(21) Application number: 23842635.7
(22) Date of filing: 07.04.2023
(51) Int. Cl.: B21B 15/00, B21B 1/22, B21B 38/00

(54) **STEEL STRIP CUTTING EQUIPMENT AND COLD-ROLLING EQUIPMENT**

(30) Priority: 19.07.2022 JP 2022115036
(71) Applicant: JFE Steel Corporation, Tokyo 100-0011 (JP)
(72) Inventor: FUKUNAGA Takayuki, Tokyo 100-0011 (JP)
(74) Representative: Hoffmann Eitle
(86) International application number: PCT/JP2023/014431
(87) International publication number: WO 2024/018701

(57) **Abstract**

Provided are cutting equipment for steel strips and a cold rolling line that allow for accurate laser cutting of joint portions between continuous steel strips. The cutting equipment for steel strips (1) includes: a joint portion detection device (5) configured to detect a joint portion (2) in which a rear end of a preceding steel strip and a front end of a succeeding steel strip are joined; an end portion detection device (6) configured to detect end portions of the steel strips; a vibration prevention device (7) configured to prevent vibration of the steel strips; and a cutting device (4) configured to laser cut a vicinity of the joint portion, wherein the end portion detection device and the vibration prevention device are provided on separate stands from each other.

## Description

### TECHNICAL FIELD

The present disclosure relates to cutting equipment for steel strips and a cold rolling line.

### BACKGROUND

In cold rolling processes of steel strips, it is common practice to join rear ends of preceding materials (preceding steel strips) and front ends of succeeding materials (succeeding steel strips) and continuously feed them to cold rolling lines for the purpose of improving productivity or yield rates. This allows for rolling in a state in which tension is applied over the entire lengths of the steel strips, whereby sheet thicknesses and shapes can be controlled with high accuracy even at the front ends and the rear ends of the steel strips.

At end portions in a sheet transverse direction of joint portions (welded portions) between the preceding materials and the succeeding materials, widthwise stepped portions are inevitably formed due to differences in steel strip width, differences in steel strip thickness, positional misalignment, or the like between the preceding materials and the succeeding materials. For this reason, when rolling is performed in this state, stress concentration may occur at the widthwise stepped portions, thus possibly leading to fractures at the joint portions. When the fractures occur at the joint portions, productivity decreases because the cold rolling lines have to be stopped, while production costs increase because work rolls damaged by fractured pieces need to be replaced.

In view of the above, to prevent fractures at the joint portions, notching is performed so as to form notches (cutouts) at the end portions in the sheet transverse direction of the joint portions for the purpose of reducing stress concentration in the vicinities of the joint portions. In cold rolling processes of steel strips, rolling is performed after notching.

One common method of notching is, for example, to mechanically shear the materials into a semicircular shape with no corners, as described in Patent Literature (PTL) 1. Outer edges of the semicircular notches, however, have a uniform curvature, and the widths of the steel strips are smallest at the joint portions, so that the maximum stress occurs at the joint portions.

Due to thinning and high alloying of cold-rolled steel strips in recent years, however, mechanically sheared areas may become a cause of fractures during rolling, and to address this, methods using laser cutting are described in Patent Literature (PTL) 2 and Patent Literature (PTL) 3.

### CITATION LIST

### Patent Literatures

PTL 1: JP H05-076911 A
PTL 2: JP 2017-080803 A
PTL 3: JP 2017-080806 A

### SUMMARY

### (Technical Problems)

After joining rear ends of preceding steel strips and front ends of succeeding steel strips, when joint portions are fed to a cutting device, there may be misalignment from a stop position in upstream and downstream directions and in the width direction, depending on the sheet passing accuracy of the line equipment and the conditions of the steel strips. As a result, cutting may be performed at portions that are not joint portions or at positions where there is no steel strip, which may result in cutting defects and damage to apparatuses.

Furthermore, in order to maintain good cuttability and cross-sectional properties, the distance between a tip of the cutting device that performs laser cutting and the steel strips needs to be close and constant at approximately 1 mm to 5 mm. Cutting devices are often equipped with a mechanism that controls distances between the tips and steel strips to be constant, so as to maintain constant distances with high accuracy. Nevertheless, the continuous steel strips are sometimes not flat, and the steel strips may vibrate. As a result, the distance may fall outside the control range of the mechanism that controls the distance to be constant, which may cause roughness of cut surfaces and uncut portions.

It would be helpful to provide cutting equipment for steel strips and a cold rolling line that allow for accurate laser cutting of joint portions between continuous steel strips.

### (Solution to Problems)

(1) Cutting equipment for steel strips according to an embodiment of the present disclosure includes:
   a joint portion detection device configured to detect a joint portion in which a rear end of a preceding steel strip and a front end of a succeeding steel strip are joined;
   an end portion detection device configured to detect end portions of the steel strips;
   a vibration prevention device configured to prevent vibration of the steel strips; and
   a cutting device configured to laser cut a vicinity of the joint portion.
(2) Cutting equipment for steel strips according to an embodiment of the present disclosure includes:
   a joint portion detection device configured to detect a joint portion in which a rear end of a preceding steel strip and a front end of a succeeding steel strip are joined;
   an end portion detection device configured to detect end portions of the steel strips;
   a vibration prevention device configured to prevent vibration of the steel strips; and
   a cutting device configured to laser cut a vicinity of the joint portion, wherein
   the end portion detection device and the vibration prevention device are provided on separate stands from each other.
(3) As an embodiment of the present disclosure, in (1) or (2),
   the vibration prevention device includes:
   a support portion provided on one of an upper side and a lower side of the steel strips;
   a pressing portion provided on another one of the upper side and the lower side of the steel strips; and
   a cylinder configured to move one of the pressing portion and the support portion with respect to another one of the pressing portion and the support portion so that the pressing portion and the support portion hold the vicinity of the joint portion.
(4) As an embodiment of the present disclosure, in any one of (1) to (3),
   the vibration prevention device includes a plurality of vibration prevention devices provided on both an upstream side and a downstream side of the cutting device with respect to a direction of travel of the steel strips.
(5) As an embodiment of the present disclosure, in any one of (1) to (4),
   the end portion detection device includes a plurality of end portion detection devices provided on both an upstream side and a downstream side of the cutting device with respect to a direction of travel of the steel strips and at both ends.
(6) A cold rolling line according to an embodiment of the present disclosure includes:
   the cutting equipment according to any one of (1) to (5); and
   a cold mill configured to cold roll the steel strips.

### (Advantageous Effect)

According to the present disclosure, the cutting equipment for steel strips and the cold rolling line that allow for accurate laser cutting of joint portions between continuous steel strips can be provided.

### BRIEF DESCRIPTION OF THE DRAWINGS

In the accompanying drawings:
FIG. 1 illustrates an example configuration of cutting equipment for steel strips according to an embodiment of the present disclosure;
FIG. 2 illustrates an example configuration of the cutting equipment for steel strips according to an embodiment of the present disclosure;
FIG. 3 illustrates an example of cutting logic for planar tracks of cutting devices;
FIG. 4 illustrates an example of height determination logic of a cutting device; and
FIG. 5 illustrates states of vibration of a steel strip due to use and non-use of pinch rolls.

### DETAILED DESCRIPTION

Hereinafter, cutting equipment for steel strips and a cold rolling line according to an embodiment of the present disclosure will be described with reference to the drawings.

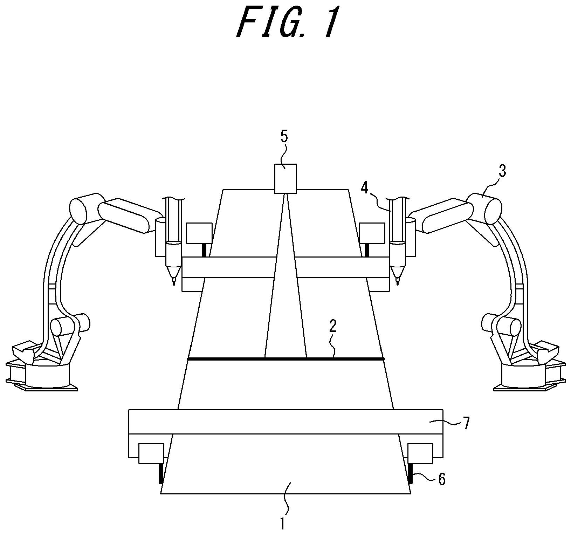

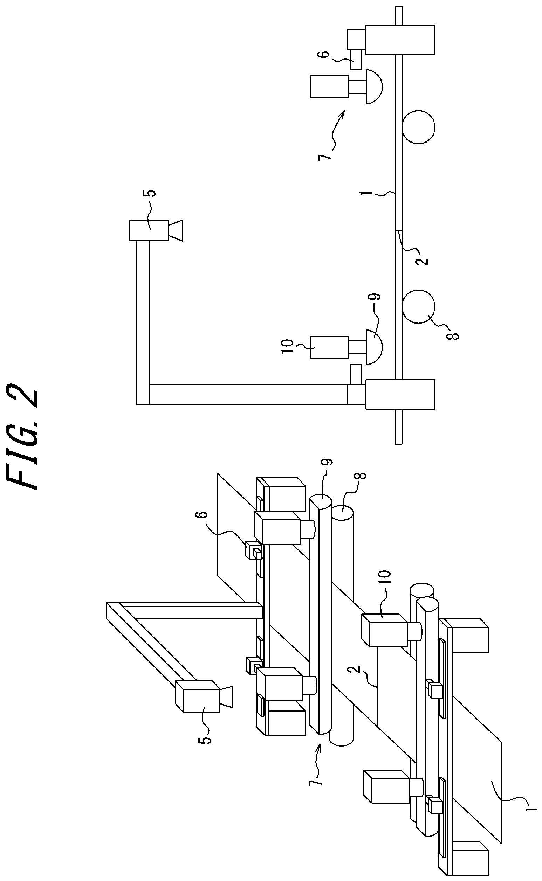

FIG. 1 and FIG. 2 illustrate example configurations of cutting equipment for steel strips 1 according to the present embodiment. In FIG. 2, the left figure is a perspective external view illustrating the cutting equipment for steel strips 1, and the right figure is a side view. In the following, a direction of transport of the steel strips 1 may also be referred to as a direction of travel. Furthermore, end portions in a sheet transverse direction may simply be referred to as "end portions."

As illustrated in FIG. 1, steel strips 1 with a joint portion 2, in which a rear end of a preceding steel strip and a front end of a succeeding steel strip are joined, is brought into the cutting equipment for the steel strips 1. The cutting equipment for the steel strips 1 includes a joint portion detection device 5 that detects the joint portion 2, end portion detection devices 6 that detect end portions of the steel strips 1, vibration prevention devices 7 that prevent vibration of the steel strips 1, and cutting devices 4 that laser cut the vicinities of the joint portion 2. In the present embodiment, the cutting equipment for the steel strips 1 includes robot arms 3 with the cutting devices 4 attached to their tips. The robot arms 3 are controlled by a control unit, such as a cutting equipment operation panel, so as to perform laser cutting, such as notching. In the present embodiment, a pair of cutting devices 4 attached to the robot arms 3 is provided on both end sides across the steel strips 1. There may be, however, more than one cutting device 4, as is the case with the present embodiment, or there may be one cutting device 4. Furthermore, in the present embodiment, the robot arms 3 are multi-axis. Accordingly, the positions of the cutting devices 4 can be freely controlled to set unrestricted cutting tracks, thus allowing for, for example, laser cutting in a circular arc.

As illustrated in FIG. 2, the joint portion detection device 5 is provided on an upper side of middle portions in the sheet transverse direction of the steel strips 1. The joint portion detection device 5, which can detect features, such as unevenness, on surfaces of the steel strips 1, may be provided at any position without limitations. The joint portion detection device 5 may be a camera that captures an image of the surfaces of the steel strips 1, as is the case with the present embodiment, but it is not limited to any particular device. It is, however, preferable that the joint portion detection device 5 be an imaging device capable of capturing an image so that the joint portion 2 can be determined without being affected by vibration or the like of the steel strips 1. Based on an image from the joint portion detection device 5, the control unit controlling the robot arms 3 can determine the joint portion 2, grasp a cutting range, identify when the cutting devices 4 are to operate, and accurately generate cutting tracks. Details of configurations of the end portion detection devices 6 and the vibration prevention devices 7 will be described later.

The cutting equipment for steel strips 1 may form part of the cold rolling line. In addition to the cutting equipment for the steel strips 1 as described above, the cold rolling line includes at least a cold mill that cold rolls the steel strips 1. The cold mill is provided on a downstream side of the cutting equipment for the steel strips 1 and cold rolls the notched steel strips 1. Here, the cold rolling line may form part of a production facility for steel sheets. The production facility for the steel sheets may further include a line for cutting the steel strips 1, for example, on the downstream side of the cold mill, so as to cut out steel sheets of a desired size.

Here, as described above, in conventional cutting equipment, cutting in portions that are not joint portions 2 or at positions where there is no steel strip 1 (cutting at inappropriate positions) may be performed. Vibration of the steel strips 1 sometimes makes it impossible to exert the control of maintaining a constant distance between tips of the cutting devices 4 and the steel strips 1, thus causing roughness of cut surfaces and uncut portions.

In the cutting equipment for steel strips 1, the end portion detection devices 6 are provided on an upstream side and the downstream side of the cutting devices 4. In the present embodiment, a total of four end portion detection devices 6, which include two on the upstream side and two on the downstream side, are provided. As illustrated in FIG. 2, the end portion detection devices 6 are provided on both the upstream side and the downstream side of the cutting devices 4 with respect to the direction of travel of the steel strips 1 and at both ends. Providing the end portion detection devices 6 on the upstream side and the downstream side allows respective end portions of the preceding steel strip and the succeeding steel strip across the joint portion 2 to be accurately detected. The end portion detection devices 6 may be configured by, for example, laser sensors that detect positions based on reflection of a laser, but light sensors or image sensors may also be used. In a case in which the end portion detection devices 6 are light sensors, they can be designed to detect positions at which light does not penetrate as the end portions. By accurately detecting the end portions of the steel strips 1 with the end portion detection devices 6 and calculating a cutting position including the accurate position of the joint portion 2 based on images of the joint portion detection devices 5, cutting at inappropriate positions can be avoided. For detection of the joint portion 2, a method of detecting a weld line based on differences in brightness of the captured images or the like may be used. Here, there is a method of detecting both the end portions of the preceding steel strip and the succeeding steel strip based on an image of the steel strips 1 taken from above. To detect the end portions of the steel strips 1 with high accuracy, however, there needs to be a difference in chromaticity, and this creates the limitation that it is necessary to provide equipment with a different chromaticity below the steel strips 1. Besides, laser cutting causes stains to form quickly, and maintenance is necessary. The method of using the end portion detection devices 6 as is the case with the present embodiment can accurately detect the respective end portions of the preceding steel strip and the succeeding steel strip, without causing such problems.

In the cutting equipment for steel strips 1, the vibration prevention devices 7 each include a support portion 8 provided on the lower side of the steel strips 1, a pressing portion 9 provided on the upper side of the steel strips 1, and a cylinder 10 that moves the pressing portion 9 with respect to the support portion 8 so that the pressing portion 9 and the support portion 8 hold the vicinity of the joint portion 2. The cylinder 10 moves the pressing portion 9 toward the support portion 8 or moves the pressing portion 9 away from the support portion 8. Similarly to the robot arms 3, the cylinder 10 may be controlled by the control unit. In the present embodiment, the pressing portion 9 and the support portion 8 function as pinch rolls that hold the steel strips 1 from the upper side and the lower side. In the present embodiment, the pressing portion 9 is configured by a sheet pressing roll, and the support portion 8 is configured by a support roll. The joint portion 2 between the preceding steel strip and the succeeding steel strip is transported into the cutting equipment for the steel strips 1, and vibration is prevented by the vibration prevention devices 7 holding the steel strips 1. Positional information necessary for cutting the end portions of the steel strips 1 is determined by the end portion detection devices 6 and the joint portion detection device 5, and the steel strips 1 are cut by having the cutting devices 4 emit a laser while operating the robot arms 3 in accordance with the cutting tracks determined by the control unit. In the cutting equipment for steel strips 1 according to the present embodiment, laser cutting can be executed, while preventing vibration of the steel strips 1 by holding the vicinities of the joint portion 2 by the pressing portions 9 and the support portions 8. Here, it is desirable to separate stands for the joint portion detection device 5 and the end portion detection devices 6 from those for the vibration prevention devices 7 if possible, because in a case in which they are on the same stands as the vibration prevention devices 7, there is a risk of misalignment during operations. In the present embodiment, the end portion detection devices 6 and the vibration prevention devices 7 are provided on separate stands from each other. This can avoid a situation in which it is impossible to exert the control of maintaining a constant distance between the tips of the cutting devices 4 and the steel strips 1 due to vibration of the steel strips 1, whereby good cuttability and cross-sectional properties can be maintained. Although in the present embodiment the end portion detection devices 6 and the vibration prevention devices 7 are provided on separate stands from each other, they may be provided on the same stands. It is, however, preferable for the end portion detection devices 6 and the vibration prevention devices 7 to be provided on separate stands, so that micro-vibration transmitted from the steel strips 1 when the vibration prevention devices 7 prevent vibration of the steel strips 1 does not affect the accuracy of detection by the end portion detection devices 6. Furthermore, the support portions 8 and the pressing portions 9 may be freely positioned without limitations. For example, the pressing portions 9 may be configured to be provided on the lower side of the steel strips 1, and the support portions 8 may be configured to be provided on the upper side of the steel strips 1. That is, each vibration prevention device 7 includes the support portion 8 provided on one of the upper side and the lower side of the steel strips 1, and the pressing portion 9 provided on another one of the upper side and the lower side of the steel strips 1. The cylinders 10 may also be configured to move the support portions 8, instead of the pressing portions 9. For example, in a case in which the support portions 8 are configured to be provided on the upper side of the steel strips 1, each cylinder 10 may move the corresponding support portion 8. That is, the cylinder 10 may move one of the pressing portion 9 and the support portion 8 with respect to another one of the pressing portion 9 and the support portion 8.

Moreover, as illustrated in FIG. 2, the joint portion detection device 5 is configured to be provided on a separate stand from that for the vibration prevention devices 7, so that no misalignment occurs during operations. Although in the present embodiment the end portion detection devices 6 and the joint portion detection device 5 are provided on the same stand, they may be separated in a case in which there are no restrictions on arrangement. Because the vibration prevention devices 7 apply loads, such as pneumatic pressure, to the steel strips 1, the stands may be distorted during sheet pressing. It is preferable to also separate the stands for the vibration prevention devices 7 from that for measurement apparatuses so that the measurement apparatuses are not affected. However, in a case in which strength is sufficient, the vibration prevention devices 7 and the measurement devices may be provided on common stands.

The vibration prevention devices 7 are preferably provided on both the upstream side and the downstream side of the cutting devices 4 with respect to the direction of travel of the steel strips 1. This allows each of the preceding steel strip and the succeeding steel strip to be held. With the respective support portions 8 (support rolls) positioned on the lower side of the preceding steel strip and the succeeding steel strip, the cylinders 10 are used to lower the pressing portions 9 (sheet pressing rolls) immediately before cutting. Thus, vibration can be prevented from being transmitted to the cutting range. Here, the vibration can be further prevented by shifting center positions of the sheet pressing rolls by 5 % to 100 % of a roll diameter, instead of providing them directly above the support rolls.

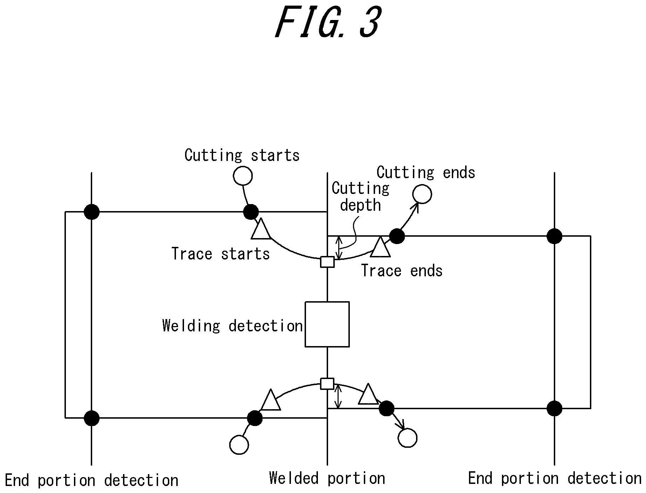

FIG. 3 illustrates an example of logic for determining cutting tracks on planar tracks. First, based on information from the joint portion detection device 5, the processing of aligning positions in a longitudinal direction of apices of predetermined cutting arcs with the joint portion 2 is performed. Next, depths (radii) are determined, based on positions in the width direction of the apices of the arcs and on information from the end portion detection devices 6, so that even one of the preceding steel strip and the succeeding steel strip that has a narrower width can be cut. After that, positions at which cutting is to be started and ended are determined outside the end portions of the steel strips 1, and positions at which cutting trace control is to be started and ended are determined inside the steel strips 1. Here, it is necessary to perform trace control only inside the steel strips 1, so as to avoid abnormal detection by the tips.

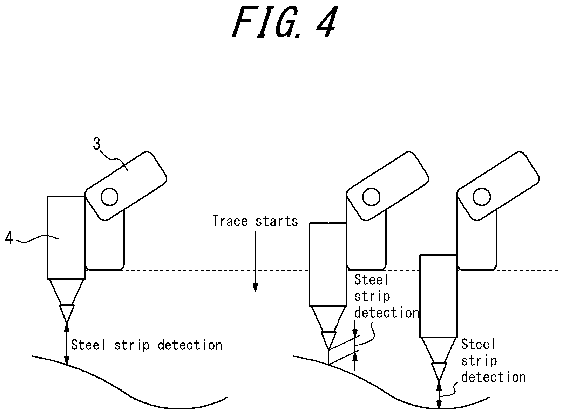

FIG. 4 illustrates logic for determining height positions of the cutting devices 4. The heights of the cutting devices 4 are determined as follows, at the positions where the trace control is performed. First, the robot arms 3 gradually descend from above the steel strips 1, and when the steel strips 1 are detected by the steel strip detection function of the cutting devices 4, the robot arms 3 are stopped based on detection signals. Then, the heights of the cutting devices 4 are determined by the function of maintaining a constant distance between the tips and the steel strips 1.

As has been described, with the above configuration, the cutting equipment for steel strips 1 and the cold rolling line according to the present embodiment can avoid cutting at inappropriate positions and prevent the effects of vibration of the steel strips 1. As a result, the joint portion 2 between the continuous preceding and succeeding steel strips can be accurately laser cut, and cold rolling can be performed without causing fractures (fractures of welded portions) of the joint portion 2.

Although an embodiment of the present disclosure has been described based on the drawings, it is to be noted that various modifications and changes may be easily made by those skilled in the art based on the present disclosure. For example, functions or the like included in each component or the like can be rearranged in a logically consistent manner, and a plurality of components or the like can be combined into one or divided. An embodiment according to the present disclosure can be implemented as a method that is executed by a device, a program that is executed by a processor included in the device, or as a storage medium in which the program is recorded. It is to be understood that these are included within the scope of present disclosure.

The advantageous effects of the contents of the present disclosure will be concretely described below based on examples (experimental examples), although the contents of the present disclosure are not limited to the examples.

### EXAMPLES

In the present example, a blank sheet to be used as an electrical steel sheet containing 3.0 mass% Si with a base metal thickness of 2.0 mm and a sheet width of 1200 mm was used, and end portions of joint portions 2 were laser cut. In the vicinities of the joint portions 2 between preceding steel strips and succeeding steel strips, circular arc-shaped laser cutting was performed for both end portions of the steel strips 1, and circular closed-section shaped laser cutting was performed for middle positions in the width direction of the preceding steel strips.

Here, in a comparative example, laser cutting was performed under the conditions where end portions were not detected but considered as fixed positions from set width information, center positions of devices were used as cutting center positions without detecting joint portions 2, height positions were uniformly the same without adjustment, and no pinch roll was used. The process of the present example and that of the comparative example were each performed on 100 coils. The success rate of removal of joint portions 2 that required cutting was 12 % in the comparative examples, but 100 % in the present examples. In the present examples, it has been confirmed that the accuracy of cutting is significantly improved, by accurately grasping the positions of the steel strips 1.

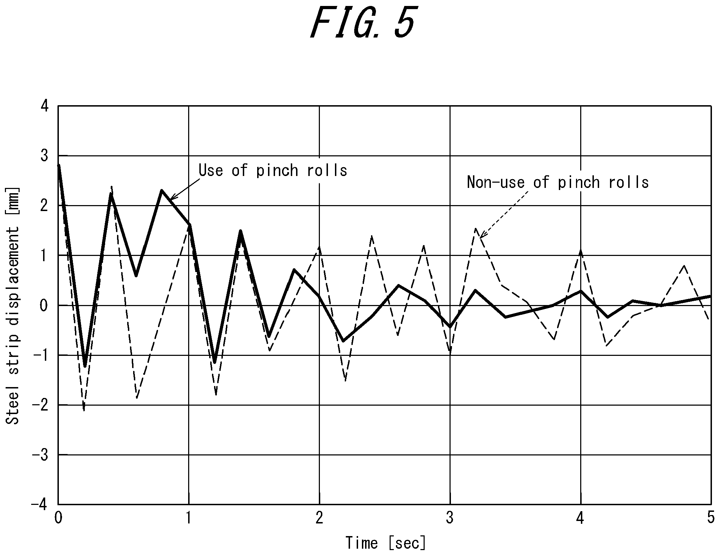

Furthermore, FIG. 5 illustrates states of vibration of a steel strip 1 due to use and non-use of pinch rolls (vibration prevention devices 7). Height displacement of the steel strip 1 was detected in 0.5-sec increments using a displacement meter. 0.0 sec is the time when the steel strip 1 was stopped at the cutting position. In a case in which pinch rolls were used, a command to hold the steel strip 1 was issued at 1.0 sec.

As illustrated in FIG. 5, the steel strip 1 significantly vibrates immediately after stopping, but it has been confirmed that the pinch rolls hold the steel strip 1, whereby the vibration of the steel strip 1 is significantly prevented, and a good cut surface can be obtained.

### REFERENCE SIGNS LIST

- 1: Steel strip
- 2: Joint portion (welded portion)
- 3: Robot arm
- 4: Cutting device
- 5: Joint portion detection device
- 6: End portion detection device
- 7: Vibration prevention device
- 8: Support portion
- 9: Pressing portion
- 10: Cylinder

## Claims

1. Cutting equipment for steel strips, the cutting equipment comprising:
a joint portion detection device configured to detect a joint portion in which a rear end of a preceding steel strip and a front end of a succeeding steel strip are joined;
an end portion detection device configured to detect end portions of the steel strips;
a vibration prevention device configured to prevent vibration of the steel strips; and
a cutting device configured to laser cut a vicinity of the joint portion.

2. Cutting equipment for steel strips, the cutting equipment comprising:
a joint portion detection device configured to detect a joint portion in which a rear end of a preceding steel strip and a front end of a succeeding steel strip are joined;
an end portion detection device configured to detect end portions of the steel strips;
a vibration prevention device configured to prevent vibration of the steel strips; and
a cutting device configured to laser cut a vicinity of the joint portion, wherein
the end portion detection device and the vibration prevention device are provided on separate stands from each other.

3. The cutting equipment according to claim 1 or 2, wherein the vibration prevention device includes:
a support portion provided on one of an upper side and a lower side of the steel strips;
a pressing portion provided on another one of the upper side and the lower side of the steel strips; and
a cylinder configured to move one of the pressing portion and the support portion with respect to another one of the pressing portion and the support portion so that the pressing portion and the support portion hold the vicinity of the joint portion.

4. The cutting equipment according to any one of claims 1 to 3, wherein the vibration prevention device comprises a plurality of vibration prevention devices provided on both an upstream side and a downstream side of the cutting device with respect to a direction of travel of the steel strips.

5. The cutting equipment according to any one of claims 1 to 4, wherein the end portion detection device comprises a plurality of end portion detection devices provided on both an upstream side and a downstream side of the cutting device with respect to a direction of travel of the steel strips and at both ends.

6. A cold rolling line comprising:
the cutting equipment according to any one of claims 1 to 5; and
a cold mill configured to cold roll the steel strips.
